# EUROPEAN PATENT APPLICATION

(11) **EP 4 467 026 A1**
(43) Date of publication of application: **27.11.2024**
(21) Application number: 22933421.4
(22) Date of filing: 24.03.2022
(51) Int. Cl.: A24F 40/57

(54) **AEROSOL GENERATION SYSTEM, CONTROL METHOD, AND PROGRAM**

(71) Applicant: Japan Tobacco Inc., Tokyo 105-6927 (JP)
(72) Inventor: AOYAMA, Tatsunari, Tokyo 130-8603 (JP); NAGAHAMA, Toru, Tokyo 130-8603 (JP); MINATO, Junji, Tokyo 130-8603 (JP)
(74) Representative: Hoffmann Eitle
(86) International application number: PCT/JP2022/014057
(87) International publication number: WO 2023/181280

(57) **Abstract**

[Problem] To provide a mechanism capable of further improving the quality of a user's experience. [Solution] An aerosol generation system comprising: a heating unit that heats an aerosol source to generate an aerosol; and a control unit that controls the operation of the heating unit, wherein the control unit controls so that preheating, which is performed after the heating of the aerosol source is started, is to be performed during a first period of time until the temperature of the heating unit reaches a first temperature and a second period of time that follows the first period of time and has a time length corresponding to the initial temperature of the heating unit.

## Description

### Technical Field

The present invention relates to an aerosol generation system, a control method, and a program.

### Background Art

Inhaler devices, such as electronic cigarettes and nebulizers, which generate substances for users to inhale, are widespread. For example, an inhaler device uses a substrate that includes an aerosol source for generating an aerosol and a flavor source for imparting a flavor component to the generated aerosol, thus producing an aerosol with an added flavor component. The user can taste the flavor by inhaling the aerosol generated by the inhaler device with the added flavor component. The action of the user inhaling the aerosol is hereinafter referred to as a puff or a puff action.

Typically, an inhaler device generates an aerosol by heating its substrate. The quality of a user's experience is greatly affected by the temperature at which the substrate is heated, so technology has been developed to achieve appropriate temperature control. Patent Literature 1, mentioned below, discloses technology for controlling the supply of electric power to a heater in multiple phases.

### Citation List

### Patent Literature

Patent Literature 1: WO 2019/186668 A1

### Summary of Invention

### Technical Problem

However, the technology described in Patent Literature 1, mentioned above, is still relatively new since its development, and there remains room for improvement in various perspectives.

Therefore, the present invention has been made in view of the above issue, and it is an object of the present invention to provide a mechanism that can further improve the quality of a user's experience.

### Solution to Problem

In order to solve the above problem, according to one aspect of the present invention, there is provided an aerosol generation system including: a heater that heats an aerosol source to generate an aerosol; and a controller that controls operation of the heater, wherein the controller applies control so that pre-heating, executed after a start of heating the aerosol source, is executed until a lapse of a first period, during which a temperature of the heater reaches a first temperature, and a second period, which follows the first period and has a time length according to an initial temperature of the heater.

The controller may set the time length of the second period longer as the initial temperature of the heater is higher.

The controller may control the operation of the heater based on control information for controlling a temperature at which the aerosol source is heated, the control information being selected from among multiple items of control information; in a case where the initial temperature of the heater is a predetermined threshold or higher, set the time length of the second period to a first time length, and, in a case where the initial temperature of the heater is less than the predetermined threshold, set the time length of the second period to a second time length longer than the first time length; and set a fixed value for a difference between the first time length and the second time length, regardless of which of the multiple items of control information is selected.

The controller may determine an end of the first period in response to a trigger indicating that the temperature of the heater has reached the first temperature.

The controller may set a time length of the first period according to the initial temperature of the heater, and may determine an end of the first period in response to a trigger indicating that the time length set for the first period has elapsed.

The controller may set the time length of the first period shorter as the initial temperature of the heater is higher.

The controller may control the operation of the heater so that the temperature of the heater maintains the first temperature in the second period.

The controller may control the operation of the heater so that the temperature of the heater reaches a second temperature higher than the first temperature in the second period.

The controller may set the first temperature based on the initial temperature of the heater.

The controller may set the first temperature higher as the initial temperature of the heater is higher.

The aerosol generation system may further include a notifier that notifies a user of information indicating a timing at which the pre-heating ends.

The aerosol generation system may further include a substrate including the aerosol source heated by the heater.

Additionally, to solve the above problem, according to another aspect of the present invention, there is provided a control method for controlling an aerosol generation system including a heater that heats an aerosol source to generate an aerosol, the control method including: controlling operation of the heater so that pre-heating, executed after a start of heating the aerosol source, is executed until a lapse of a first period, during which a temperature of the heater reaches a first temperature, and a second period, which follows the first period and has a time length according to an initial temperature of the heater.

Furthermore, to solve the above problem, according to another aspect of the present invention, there is provided a program executed by a computer controlling an aerosol generation system including a heater that heats an aerosol source to generate an aerosol, the program causing the computer to function as: a controller that controls operation of the heater so that pre-heating, executed after a start of heating the aerosol source, is executed until a lapse of a first period, during which a temperature of the heater reaches a first temperature, and a second period, which follows the first period and has a time length according to an initial temperature of the heater.

### Advantageous Effects of Invention

According to the present invention as described above, a mechanism that can further improve the quality of a user's experience is provided.

### Brief Description of Drawings

[Fig. 1] Fig. 1 is a schematic diagram schematically illustrating a configuration example of an inhaler device.
[Fig. 2] Fig. 2 is a graph illustrating an example of the transition of the temperature of a heater 121 in the case where temperature control is performed based on a heating profile indicated in Table 1.
[Fig. 3] Fig. 3 is a graph illustrating an example of the transition of the temperature of the heater in the case where the initial temperature of the heater is 200°C.
[Fig. 4] Fig. 4 is a flowchart illustrating an example of the flow of a process executed by the inhaler device according to the present embodiment.

### Description of Embodiments

A preferred embodiment of the present invention will be described in detail below with reference to the accompanying drawings. Note that, in the present specification and drawings, structural elements having substantially the same functional configuration are denoted by the same reference numeral and overlapping descriptions are omitted.

### <1. Configuration example of inhaler device>

An inhaler device is a device that generates a substance that is inhaled by a user. Hereinafter, the substance generated by the inhaler device will be described as being an aerosol. Alternatively, the substance generated by the inhaler device may be a gas.

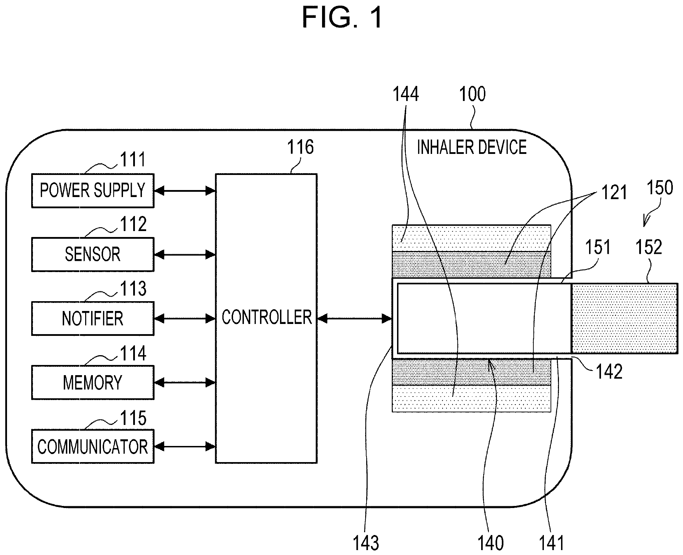

Fig. 1 is a schematic diagram schematically illustrating a configuration example of an inhaler device. As illustrated in Fig. 1, an inhaler device 100 according to the present configuration example includes a power supply 111, a sensor 112, a notifier 113, a memory 114, a communicator 115, a controller 116, a heater 121, a holder 140, and a heat insulator 144.

The power supply 111 stores electric power. The power supply 111 supplies electric power to the structural elements of the inhaler device 100 under the control of the controller 116. The power supply 111 may be a rechargeable battery such as a lithium ion secondary battery.

The sensor 112 acquires various items of information regarding the inhaler device 100. In an example, the sensor 112 may be a pressure sensor such as a condenser microphone, a flow sensor, or a temperature sensor, and acquire a value generated in accordance with the user's inhalation. In another example, the sensor 112 may be an input device that receives information input by the user, such as a button or a switch.

The notifier 113 provides information to the user. The notifier 113 may be a light-emitting device that emits light, a display device that displays an image, a sound output device that outputs sound, or a vibration device that vibrates.

The memory 114 stores various items of information for operation of the inhaler device 100. The memory 114 may be a non-volatile storage medium such as flash memory.

The communicator 115 is a communication interface capable of communication in conformity with any wired or wireless communication standard. Such a communication standard may be, for example, Wi-Fi (registered trademark), Bluetooth (registered trademark), or a standard using a low-power wide area (LPWA).

The controller 116 functions as an arithmetic processing unit and a control circuit, and controls the overall operations of the inhaler device 100 in accordance with various programs. The controller 116 includes an electronic circuit such as a central processing unit (CPU) or a microprocessor, for example.

The holder 140 has an internal space 141, and holds a stick substrate 150 in a manner partially accommodated in the internal space 141. The holder 140 has an opening 142 that allows the internal space 141 to communicate with outside. The holder 140 accommodates the stick substrate 150 that is inserted into the internal space 141 through the opening 142. For example, the holder 140 has a tubular body having the opening 142 and a bottom 143 on its ends, and defines the pillar-shaped internal space 141. The holder 140 connects with an airflow path that supplies air to the internal space 141. For example, a side surface of the inhaler device 100 has an air inlet hole that is an inlet of air into the airflow path. For example, the bottom 143 has an air outlet hole that is an outlet of the air from the airflow path to the internal space 141.

The stick substrate 150 includes a substrate 151 and an inhalation port 152. The substrate 151 includes an aerosol source. The aerosol source is, for example, a polyhydric alcohol such as glycerin and propylene glycol, and a liquid such as water. The aerosol source may include a flavor component that is either derived from tobacco or not derived from tobacco. For the inhaler device 100 that is a medical inhaler such as a nebulizer, the aerosol source may include a medicine. Note that, in the present configuration example, the aerosol source is not limited to a liquid, and may be a solid. The stick substrate 150 held by the holder 140 includes the substrate 151 at least partially accommodated in the internal space 141 and the inhalation port 152 at least partially protruding from the opening 142. When the user inhales with the inhalation port 152 protruding from the opening 142 in his/her mouth, air flows into the internal space 141 through the airflow path (not illustrated), and the air and an aerosol generated from the substrate 151 reach inside the mouth of the user

The heater 121 heats the aerosol source to atomize the aerosol source and generate the aerosol. In the example illustrated in Fig. 1, the heater 121 has a film-like shape and surrounds the outer circumference of the holder 140. Subsequently, heat produced from the heater 121 heats the substrate 151 of the stick substrate 150 from the outer circumference, generating the aerosol. The heater 121 produces heat when receiving electric power from the power supply 111. In an example, the electric power may be supplied in response to the sensor 112 detecting a start of the user's inhalation and/or an input of predetermined information. Subsequently, the supply of the electric power may be stopped in response to the sensor 112 detecting an end of the user's inhalation and/or an input of predetermined information.

The heat insulator 144 prevents heat from transferring from the heater 121 to the other structural elements. For example, the heat insulator 144 may be a vacuum heat insulator or an aerogel heat insulator.

The configuration example of the inhaler device 100 has been described above. The inhaler device 100 is not limited to the above configuration, and may be configured in various ways as exemplified below.

In an example, the heater 121 may have a blade-like shape, and may be disposed so that the heater 121 protrudes from the bottom 143 of the holder 140 toward the internal space 141. In this case, the heater 121 having the blade-like shape is inserted into the substrate 151 of the stick substrate 150 and heats the substrate 151 of the stick substrate 150 from its inside. In another example, the heater 121 may be disposed so that the heater 121 covers the bottom 143 of the holder 140. In still another example, the heater 121 may be implemented as a combination of two or more selected from a first heater that covers the outer circumference of the holder 140, a second heater having the blade-like shape, and a third heater that covers the bottom 143 of the holder 140.

In another example, the holder 140 may include an opening/closing mechanism that at least partially opens and closes an outer shell defining the internal space 141. An example of the opening/closing mechanism includes a hinge. In addition, the holder 140 may sandwich the stick substrate 150 inserted into the internal space 141 by opening and closing the outer shell. In this case, the heater 121 may be at the sandwiching position of the holder 140 and may produce heat while pressing the stick substrate 150.

The stick substrate 150 includes an aerosol source and is an example of a substrate that contributes to the generation of an aerosol. The inhaler device 100 is an example of an aerosol generation device that heats the stick substrate 150 to generate an aerosol. The combination of the inhaler device 100 and the stick substrate 150 generates an aerosol. Therefore, the combination of the inhaler device 100 and the stick substrate 150 may be conceived as an aerosol generation system.

### <2. Technical Features>

### <2.1. Heating profile>

The controller 116 controls the operation of the heater 121 based on a heating profile. Control of the operation of the heater 121 is implemented by controlling the supply of electric power from the power supply 111 to the heater 121. The heater 121 heats the stick substrate 150 using the electric power supplied from the power supply 111.

A heating profile is control information for controlling the temperature at which the aerosol source is heated. The heating profile may be control information for controlling the temperature of the heater 121. In an example, the heating profile may include a target value for the temperature of the heater 121 (hereinafter also referred to as the target temperature). The target temperature may change according to the elapsed time since the start of heating. In that case, the heating profile includes information defining a time series transition of the target temperature. In another example, the heating profile may include parameters that define a method of supplying electric power to the heater 121 (hereinafter also referred to as power supply parameters). The power supply parameters include, for example, the voltage applied to the heater 121, the ON/OFF of the supply of electric power to the heater 121, the feedback control method to be adopted, or the like. The ON/OFF of the supply of electric power to the heater 121 may be perceived as the ON/OFF of the heater 121.

The controller 116 controls the operation of the heater 121 such that the temperature of the heater 121 (hereinafter also referred to as the actual temperature) transitions in the same or similar manner as the target temperature defined in the heating profile. The heating profile is typically designed to optimize the flavor the user tastes when inhaling an aerosol generated from the stick substrate 150. Thus, controlling the operation of the heater 121 based on the heating profile can optimize the flavor the user tastes.

Temperature control of the heater 121 can be implemented by known feedback control, for example. Feedback control may be performed by, for example, a PID controller (Proportional-Integral-Differential Controller). The controller 116 may cause the electric power from the power supply 111 to be supplied to the heater 121 in the form of pulses by pulse width modulation (PWM) or pulse frequency modulation (PFM). In that case, the controller 116 is able to control the temperature of the heater 121 by adjusting the duty ratio or frequency of the electric power pulses in the feedback control. Alternatively, the controller 116 may perform simple ON/OFF control in the feedback control. For example, the controller 116 may execute heating by the heater 121 until the actual temperature reaches the target temperature, interrupt the heating by the heater 121 when the actual temperature reaches the target temperature, and resume the heating by the heater 121 when the actual temperature falls below the target temperature.

The temperature of the heater 121 can be quantified, for example, by measuring or estimating the electrical resistance of the heater 121 (more precisely, a heat generating resistor constituting the heater 121). This is because the electrical resistance of the heat generating resistor changes according to the temperature. The electrical resistance of the heat generating resistor can be estimated, for example, by measuring the amount of voltage drop in the heat generating resistor. The amount of voltage drop in the heat generating resistor can be measured by a voltage sensor that measures the potential difference applied to the heat generating resistor. In another example, the temperature of the heater 121 can be measured by a temperature sensor, such as a thermistor, installed in the vicinity of the heater 121.

The period from the start to the end of a process of generating an aerosol using the stick substrate 150 is hereinafter also referred to as a heating session. In other words, a heating session is a period during which the supply of electric power to the heater 121 is controlled based on a heating profile. The start of the heating session is the timing at which heating based on the heating profile is started. The end of the heating session is the timing at which a sufficient amount of aerosol is no longer generated. The heating session includes a pre-heating period and a puff-enabled period subsequent to the pre-heating period. The puff-enabled period is a period during which a sufficient amount of aerosol is assumed to be generated. The pre-heating period is a period from the start of heating to the start of the puff-enabled period. Heating performed during the pre-heating period is also referred to as pre-heating.

An example of the heating profile is indicated in Table 1 below.

**[Table 1]**

| Table 1. Example of heating profile | | | | |
|---|---|---|---|---|
| Period | | Time series transition of target temperature | Time series transition of power supply parameters | |
| Category | Duration | | Voltage | ON/OFF |
| STEP 0 | - | Rise to 300°C (No time control) | High | ON |
| STEP 1 | 20 seconds | Maintain 300°C | High | ON |
| STEP 2 | 20 seconds | Maintain 300°C | High | ON |
| STEP 3 | - | Decrease to 220°C (No time control) | Switch to low | OFF |
| STEP 4 | 20 seconds | Rise to 270°C | Low | ON |
| STEP 5 | 20 seconds | | Low | ON |
| STEP 6 | 20 seconds | | Low | ON |
| STEP 7 | 20 seconds | | Low | ON |
| STEP 8 | 40 seconds | Maintain 270°C | Low | ON |
| STEP 9 | 20 seconds | - | Switch to high | OFF |

As indicated in Table 1, the heating profile is divided into multiple periods, in each of which a time series transition of the target temperature and a time series transition of the power supply parameters may be defined. In the example indicated in Table 1, the heating profile is divided into a total often periods STEP 0 to STEP 9. In each STEP, a time series transition of the target temperature and a time series transition of the power supply parameters are defined.

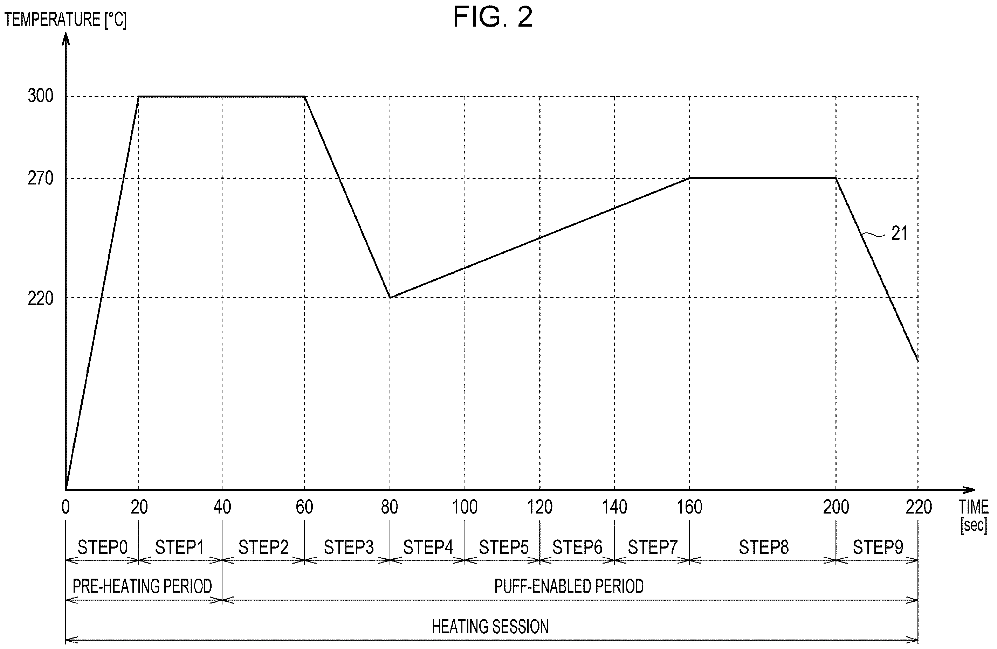

The transition of the temperature of the heater 121 in the case where the controller 116 performs temperature control according to the heating profile indicated in Table 1 will be described with reference to Fig. 2. Fig. 2 is a graph illustrating an example of the transition of the temperature of the heater 121 in the case where temperature control is performed based on the heating profile indicated in Table 1. In this graph, time (seconds) is plotted on the horizontal axis. In this graph, the temperature of the heater 121 is plotted on the vertical axis. A line 21 in this graph indicates the transition of the temperature of the heater 121. As illustrated in Fig. 2, the temperature of the heater 121 transitions in the same or similar manner as the transition of the target temperature defined in the heating profile. Hereinafter, an example of the heating profile will be described with reference to Table 1 and Fig. 2.

As indicated in Table 1 and Fig. 2, in STEP 0, the temperature of the heater 121 rises from an initial temperature to 300°C. The initial temperature is the temperature of the heater 121 at the start of heating. In STEP 0, no time control is implemented. Here, time control is a control that also determines the elapsed time until the target value (here, the target temperature) in the heating profile is reached. That is, in STEP 0, the target value is set as the heating profile, but the target for the elapsed time until the target value is reached may not need to be set. If time control is implemented, STEP ends in response to a trigger indicating the lapse of its duration. Since no time control is implemented in STEP 0, STEP 0 ends in response to a trigger indicating that the temperature of the heater 121 has reached 300°C. In the example illustrated in Fig. 2, STEP 0 ends in 20 seconds. Subsequently, the temperature of the heater 121 is maintained at 300°C in STEP 1 and STEP 2. The pre-heating period ends with the end of STEP 1, and the puff-enabled period begins with the start of STEP 2. Note that implementing no time control in STEP 0 does not prevent such control that, for example, if a predetermined temperature is not reached within a predetermined time, it is determined as an error and the heating is stopped.

For the user, a shorter pre-heating period is desirable. However, if the stick substrate 150 is not sufficiently heated, moisture inside the stick substrate 150 may not be sufficiently evaporated and remain there. If the user puffs in that state, hot water vapor may be delivered into the user's mouth. Therefore, it is desirable to rapidly raise the temperature of the heater 121 until it reaches 300°C in STEP 0, and to ensure the duration of STEP 1 to some extent.

Here, in STEP 0 to STEP 2, the supply of electric power to the heater 121 is performed at a high voltage. Therefore, it becomes possible to raise the temperature of the heater 121 to 300°C at the maximum rate and maintain a high temperature thereafter. It also becomes possible to shorten the pre-heating period.

As indicated in Table 1 and Fig. 2, the temperature of the heater 121 falls to 220°C in STEP 3. In STEP 3, no time control is implemented. Therefore, STEP 3 ends in response to a trigger indicating that the temperature of the heater 121 has decreased to 220°C. In the example illustrated in Fig. 2, STEP 3 ends in 20 seconds. In STEP 3, the supply of electric power to the heater 121 is turned OFF. Therefore, it becomes possible to reduce the temperature of the heater 121 at the maximum rate. In the meanwhile, the voltage applied to the heater 121 is switched from a high voltage to a low voltage. In the case of switching the voltage during a period in which electric power is supplied to the heater 121, the accuracy of temperature control may decrease due to factors such as noise on the gain of the PID controller. In this regard, by switching the voltage during a period in which no electric power is supplied to the heater 121, it becomes possible to prevent a decrease in the accuracy of temperature control involved in voltage switching.

As indicated in Table 1 and Fig. 2, the temperature of the heater 121 then rises slowly to 270°C in STEP 4 to STEP 7. As such, control information across multiple STEPs may be defined. Thereafter, the temperature of the heater 121 is maintained at 270°C in STEP 8.

Here, in STEP 4 to STEP 8, electric power is supplied to the heater 121 at a low voltage. In STEP 4 to STEP 8, there is no need to rapidly raise the temperature of the heater 121 or to maintain the heater 121 at a high temperature. By keeping a low voltage in STEP 4 to STEP 8, it becomes possible to suppress power consumption in the entire heating session.

As indicated in Table 1 and Fig. 2, the temperature of the heater 121 decreases in STEP 9. In STEP 9, the supply of electric power to the heater 121 is turned OFF. In the meanwhile, the voltage applied to the heater 121 is switched from a low voltage to a high voltage. This makes it possible to start the next heating session at a high voltage. Additionally, by switching the voltage during a period in which no electric power is supplied to the heater 121, it becomes possible to prevent a decrease in the accuracy of temperature control involved in voltage switching. In STEP 9, the duration is defined, while the target temperature is not. Therefore, STEP 9 ends in response to a trigger indicating the end of its duration. In STEP 9, a sufficient amount of aerosol may be generated by the residual heat of the stick substrate 150. Therefore, in this example, the puff-enabled period, i.e., the heating session, ends with the end of STEP 9.

The notifier 113 may notify the user of information indicating the timing at which the pre-heating ends. For example, the notifier 113 notifies the user of information indicating that the pre-heating is about to end before it actually ends, or of information indicating that the pre-heating has ended at the moment it actually ends. The user may be notified, for example, through illuminated LEDs or vibrations. Based on this notification, the user is able to start puffing immediately after the pre-heating ends.

Likewise, the notifier 113 may notify the user of information indicating the timing at which the puff-enabled period ends. For example, the notifier 113 notifies the user of information indicating that the puff-enabled period is about to end before it actually ends, or of information indicating that the puff-enabled period has ended at the moment it actually ends. The user may be notified, for example, through illuminated LEDs or vibrations. Based on this notification, the user is able to puff until the puff-enabled period ends.

Note that the heating profile described above is only one example, and various other examples are conceivable. In an example, the number of STEPs, the duration of each STEP, and the target temperature may be changed as appropriate. In another example, the temperature of the heater 121 may be maintained at 220°C in STEP 4.

### <2.2. Control based on initial temperature of heater 121>

The controller 116 applies control so that pre-heating, executed after the start of heating the stick substrate 150 and continues until it becomes possible for the user to inhale an aerosol, is executed until a lapse of a first period, during which the temperature of the heater 121 reaches a first temperature, and a second period, which follows the first period and has a time length according to the initial temperature of the heater 121. Note that "until it becomes possible for the user to inhale an aerosol" includes the meaning that it is assumed to be until a sufficient amount of aerosol is generated. That is, "until it becomes possible for the user to inhale an aerosol" includes the meaning that the stick substrate 150 becomes suitable for the user to inhale an aerosol, and it is acceptable not to prohibit the user from inhaling during the pre-heating. The first period is a period that begins with the start of heating based on the heating profile. The second period is a period that follows the first period. The first period and the second period constitute a pre-heating period. In the example indicated in Table 1 and Fig. 2, STEP 0 corresponds to the first period, and STEP 1 corresponds to the second period. That is, the controller 116 sets the time length of STEP 1 according to the initial temperature of the heater 121. Note that setting the time length of STEP 1 according to the initial temperature of the heater 121 is a concept including setting the time length of STEP 1 according to the electrical resistance of the heater 121 at the start of heating, which serves as the basis for calculating the initial temperature of the heater 121.

Here, the controller 116 determines the end of STEP 0 in response to a trigger indicating that the temperature of the heater 121 has reached the first temperature. The first temperature refers to the target temperature for STEP 0, which is a temperature that serves as an indicator for transitioning from STEP 0 to STEP 1. The controller 116 then controls the operation of the heater 121 so that the temperature of the heater 121 maintains the first temperature in STEP 1. In the example indicated in Table 1 and Fig. 2, the first temperature is 300°C.

There may be cases where so-called chain smoking occurs, in which the stick substrate 150 is replaced and heated multiple times at short intervals. In cases where chain smoking occurs, the initial temperature of the heater 121 in the second and subsequent heating sessions is higher than the initial temperature of the heater 121 in the first heating session. The higher the initial temperature, the faster the heater 121 reaches the first temperature, thereby shortening the first period. Therefore, if no action is taken, the pre-heating period will be uniformly shortened by the same amount as the reduction in the first period. In this regard, according to such a configuration, a pre-heating period (in more detail, STEP 1) of an appropriate length according to the initial temperature is ensured; thus, it becomes possible to deliver an appropriate smoke taste to the user, compared to the case where the pre-heating period is uniformly shortened by the same amount as the reduction in the first period.

Specifically, the controller 116 sets the time length of STEP 1 longer as the initial temperature of the heater 121 is higher. In other words, the controller 116 extends STEP 1 further as it shortens STEP 0 more. According to such a configuration, even if STEP 0 is shortened, the stick substrate 150 can be sufficiently heated during the pre-heating period. As a result, it becomes possible during the pre-heating period to evaporate moisture inside the stick substrate 150 and prevent the delivery of water vapor to the user. In particular, by extending the second period (here, the time length of STEP 1) after the first temperature is reached, the period in which the temperature of the heater 121 is higher than a predetermined temperature (e.g., a temperature at which moisture can easily evaporate) can be extended. As a result, it becomes possible to maintain a long period in which moisture inside the stick substrate 150 evaporates.

The controller 116 may set the time length of STEP 1 to a first time length in the case where the initial temperature of the heater 121 is less than a predetermined threshold. On the other hand, the controller 116 may set the time length of STEP 1 to a second time length, which is longer than the first time length, in the case where the initial temperature of the heater 121 is the predetermined threshold or higher. For example, the controller 116 may set the time length of STEP 1 to 20 seconds in the case where the initial temperature of the heater 121 is less than 200°C, and set the time length of STEP 1 to 22 seconds in the case where the initial temperature of the heater 121 is 200°C or higher. According to such a configuration, the extension of STEP 1 is limited to cases where the initial temperature of the heater 121 is the predetermined threshold or higher. This makes it possible to avoid unnecessary extension of STEP 1 and shorten the pre-heating period, for example, when it is possible to evaporate the moisture inside the stick substrate 150 without extending STEP 1.

In an example, the controller 116 may set predetermined values as the first time length and the second time length. For example, it may be stored in the memory 114 that the first time length is 20 seconds and the second time length is 22 seconds.

In another example, the controller 116 may set the first time length to a default time length for STEP 1, and the second time length to the sum of the default time length and a predetermined value. For example, if the default time length is 20 seconds, the first time length may be 20 seconds, and the second time length may be 22 seconds, which is 20 seconds with two seconds added.

Here, the controller 116 may control the operation of the heater 121 based on one heating profile selected from among multiple heating profiles. Multiple heating profiles that the controller 116 can use are stored in the memory 114, and the user selects which heating profile to use. In that case, the controller 116 may set a fixed value for the difference between the first time length and the second time length, regardless of which of the multiple heating profiles is selected. For example, the controller 116 may set the second time length to a length that is two seconds longer than the first time length, regardless of which of the multiple heating profiles is selected. According to such a configuration, the difference between the first time length and the second time length can be appropriately provided even in the case where the heating profile is switched and accordingly the default time length for STEP 1 is switched. Such a configuration is particularly effective in environments where the user can download and use new heating profiles or customize heating profiles. This is because it is unnecessary to predetermine and store the first time length and the second time length for each heating profile.

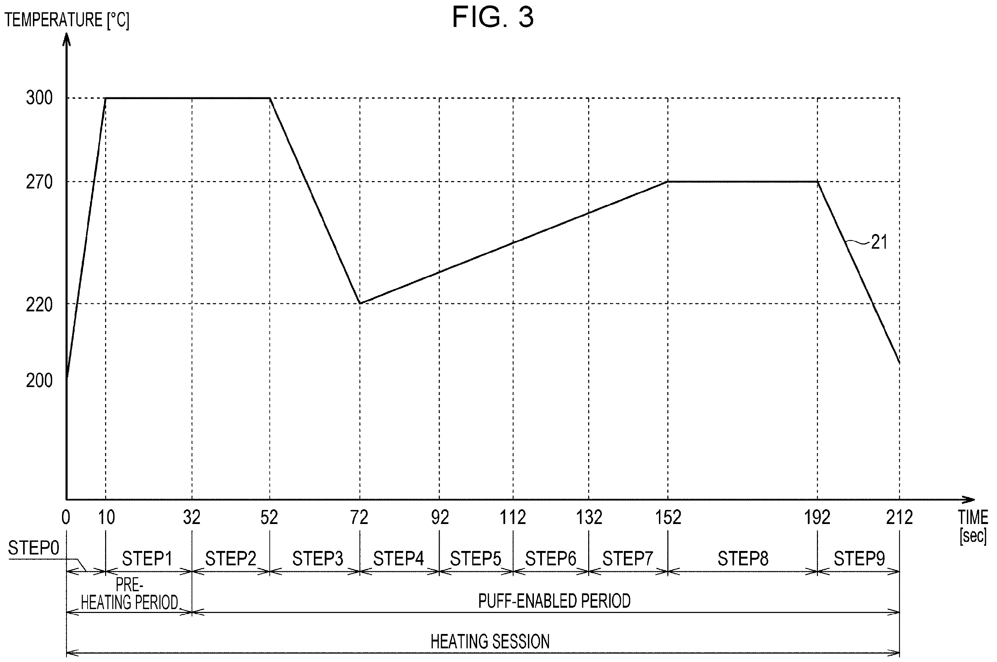

Hereinafter, a specific example of the above control will be described with reference to Fig 3.

It is assumed that the default time length for STEP 1 is 20 seconds, as indicated in Table 1. It is then assumed that the controller 116 sets the time length of STEP 1 to 20 seconds., which is as it is, in the case where the initial temperature of the heater 121 is less than 200°C, and sets the time length of STEP 1 to 22 seconds in the case where the initial temperature of the heater 121 is 200°C or higher. An example of the temperature transition of the heater 121 in the case where the initial temperature of the heater 121 is 200°C or higher is illustrated in Fig. 3.

Fig. 3 is a graph illustrating an example of the transition of the temperature of the heater 121 in the case where the initial temperature of the heater 121 is 200°C. In this graph, time (seconds) is plotted on the horizontal axis. In this graph, the temperature of the heater 121 is plotted on the vertical axis. The line 21 in this graph indicates the transition of the temperature of the heater 121. As illustrated in Fig. 3, in STEP 0, the temperature of the heater 121 rises from 200°C, which is the initial temperature, to 300°C. In the example illustrated in Fig. 3, ten seconds after the start of heating, the temperature of the heater 121 reaches 300°C, marking the end of STEP 0 and the beginning of STEP 1. Since the initial temperature of the heater 121 is 200°C or higher, the controller 116 determines the end of STEP 1, i.e., the end of the pre-heating, 22 seconds after the start of STEP 1, and allows the notifier 113 to execute a notification of information indicating the end of the pre-heating. The process in STEP 2 and onwards is the same as or similar to the process described above with reference to Fig. 2.

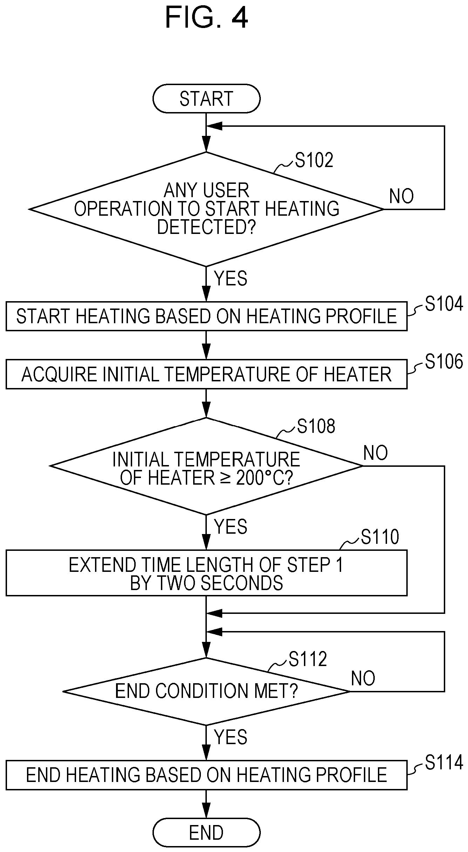

Hereinafter, the flow of a process executed by the inhaler device 100 according to the present embodiment will be described with reference to Fig. 4.

Fig. 4 is a flowchart illustrating an example of the flow of a process executed by the inhaler device 100 according to the present embodiment. This flow illustrates an example of the flow of a process in the case of performing temperature control illustrated in Figs. 2 and 3.

As illustrated in Fig. 4, first, the controller 116 determines whether a user operation to start heating has been detected (step S 102). An example of a user operation to start heating is an operation on the inhaler device 100, such as operating a switch or the like provided on the inhaler device 100. Another example of a user operation to start heating is inserting the stick substrate 150 into the inhaler device 100.

If it is determined that no user operation to start heating has been detected (step S102: NO), the controller 116 waits until a user operation to start heating is detected.

On the other hand, if it is determined that a user operation to start heating has been detected (step S102: YES), the controller 116 starts heating based on a heating profile (step S104). For example, the controller 116 starts supplying electric power from the power supply 111 to the heater 121.

The controller 116 then acquires the initial temperature of the heater 121 (step S106). In an example, the initial temperature of the heater 121 may be acquired based on the electrical resistance of the heater 121 at the start of supplying electric power to the heater 121. Note that the initial temperature of the heater 121 may be measured by a temperature sensor, such as a thermistor, installed in the vicinity of the heater 121. In that case, the initial temperature of the heater 121 may be acquired prior to the start of heating.

Next, the controller 116 determines whether the initial temperature of the heater 121 is 200°C or higher (step S108).

In the case where the initial temperature of the heater 121 is determined to be 200°C or higher (step S108: YES), the controller 116 extends the time length of STEP 1 by two seconds and sets it to 22 seconds (step 5110). On the other hand, in the case where the initial temperature of the heater 121 is determined to be less than 200°C (step S108: NO), the controller 116 sets the time length of STEP 1 to remain as the default length of 20 seconds. In any case, heating based on the heating profile is performed, reflecting the set time length of STEP 1.

After that, the controller 116 determines whether an end condition has been met (step S112). An example of the end condition is that the duration of STEP 9 has elapsed. Another example of the end condition is that the number of puffs since the start of heating has reached a predetermined number

If it is determined that the end condition has not been met (step S112: NO), the controller 116 waits until the end condition is met.

On the other hand, if it is determined that the end condition has been met (step S112: YES), the controller 116 ends the heating based on the heating profile (step S114). After that, the process ends.

Note that, if it is determined in step S102 that a user operation to start heating has been detected, the controller 116 may supply electric power to the heater 121 in order to acquire the initial temperature of the heater 121 before performing step S104, thereby acquiring the initial temperature of the heater 121. Then, the controller 116 may, after executing step S108 and step S110, execute step S104. After that, the controller 116 executes step S112 and step S114, as described above.

### <4. Supplement>

Although the preferred embodiment of the present invention has been described in detail above with reference to the accompanying drawings, the present invention is not limited to such an example. It is obvious that those with ordinary skill in the art to which the present invention pertains may conceive various modifications or variations within the scope of the technical concepts described in the claims, and these are understood to naturally fall within the technical scope of the present invention.

### (1) First modification

Although an example in which no time control is implemented in STEP 0 has been described in the above embodiment, the present invention is not limited to such an example. The controller 116 may implement time control in STEP 0. For example, the speed of temperature rise may be controlled in STEP 0 so that the temperature of the heater 121 reaches 300°C at the end of the duration of STEP 0.

In particular, the controller 116 may set the time length of STEP 0 according to the initial temperature of the heater 121 and determine the end of STEP 0 in response to a trigger indicating that the time length set for STEP 0 has elapsed. In that case, the controller 116 sets the time length of STEP 0 shorter as the initial temperature of the heater 121 is higher. For example, the controller 116 sets the time length of STEP 0 to 10 seconds in the case where the initial temperature of the heater 121 is 200°C or higher, and sets the time length of STEP 0 to 20 seconds in the case where the initial temperature of the heater 121 is less than 200°C. According to such a configuration, even in the case where time control is implemented, the time length of STEP 0 can be shortened according to the initial temperature of the heater 121.

### (2) Second modification

Although an example in which STEP 0 is a period until the temperature of the heater 121 reaches the first temperature, and STEP 1 is a period in which the temperature of the heater 121 is maintained at the first temperature has been described in the above embodiment, the present invention is not limited to such an example.

The controller 116 may control the operation of the heater 121 in STEP 1 so that the temperature of the heater 121 reaches a second temperature higher than the first temperature. For example, the controller 116 may apply control so that, after the temperature of the heater 121 reaches the second temperature in the middle of STEP 1, it maintains the second temperature until the duration of STEP 1 elapses. Alternatively, the controller 116 may control the speed of temperature rise so that the temperature of the heater 121 reaches the second temperature at the end of the duration of STEP 1. As described above, the target temperature for STEP 0 and the target temperature for STEP 1 may be different. For example, the first temperature may be set to 290°C, while the second temperature may be set to 300°C. According to such a configuration, it becomes possible to secure a buffer to accommodate any overshoots that may occur in STEP 0. As such, it becomes possible to prevent excessive heating of the stick substrate 150 and to deliver an appropriate smoke taste to the user.

Here, the controller 116 may set the first temperature based on the initial temperature of the heater 121. Specifically, the controller 116 may set the first temperature higher as the initial temperature of the heater 121 is higher. For example, the controller 116 sets the first temperature to 90% of the second temperature in the case where the initial temperature of the heater 121 is less than 200°C, and sets the first temperature to 95% of the second temperature in the case where the initial temperature of the heater 121 is 200°C or higher. Setting the first temperature higher as the initial temperature is higher allows for a longer time for heating the stick substrate 150 at a high temperature in STEP 0. Accordingly, it becomes possible during the pre-heating period to evaporate moisture inside the stick substrate 150 and prevent the delivery of water vapor to the user

### (3) Other modifications

Although an example in which there is one predetermined threshold for comparison with the initial temperature of the heater 121 has been described in the above embodiment, the present invention is not limited to such an example. Multiple predetermined thresholds may be set to compare with the initial temperature of the heater 121. For example, the time length of STEP 1 may be set to the first time length in the case where the initial temperature of the heater 121 is less than a first threshold. Additionally, in the case where the initial temperature of the heater 121 is the first threshold or higher and less than a second threshold higher than the first threshold, the time length of STEP 1 may be set to the second time length. Furthermore, in the case where the initial temperature of the heater 121 is the second threshold or higher, the time length of STEP 1 may be set to a third time length longer than the second time length.

Although an example in which the heating profile includes a target value for the temperature of the heater 121 has been described in the above embodiment, the present invention is not limited to such an example. The heating profile may include a target value for a parameter regarding the temperature of the heater 121. Parameters regarding the temperature of the heater 121 include, in addition to the temperature of the heater 121 itself described in the above embodiment, the electrical resistance of the heater 121.

Although an example in which the heater 121 is configured as a heat generating resistor and is heated by electrical resistance has been described in the above embodiment, the present invention is not limited to such an example. For example, the heater 121 may include an electromagnetic induction source, such as a coil that generates a magnetic field, and a susceptor that produces heat by the induction heating, and the susceptor may heat the stick substrate 150. In this case, the controller 116 applies an alternating current to the electromagnetic induction source to generate an alternating magnetic field, and allows the alternating magnetic field to penetrate the susceptor, thereby causing the susceptor to produce heat. The susceptor producing heat by induction heating is provided in the inhaler device 100. In this case, the temperature at which the aerosol source is heated, which is controlled based on a heating profile, is the temperature of the susceptor. The temperature of the susceptor can be estimated based on the electrical resistance of the susceptor calculated from factors such as the impedance of a circuit including the electromagnetic induction source.

Note that a series of processes performed by each device described in the present specification may be implemented using software, hardware, and a combination of software and hardware. Programs constituting the software are pre-stored, for example, on a recording medium (in detail, a computer-readable non-transitory storage medium) provided inside or outside each device. Each program is then loaded into a RAM upon execution by, for example, a computer controlling each device described in the present specification, and executed by a processing circuit, such as a CPU. The recording medium includes, for example, a magnetic disk, an optical disk, a magneto-optical disk, a flash memory, and the like. Additionally, the computer programs mentioned above may also be delivered, for example, over a network, without the use of a recording medium. Moreover, the computer mentioned above may be an application-specific integrated circuit such as an ASIC, a general-purpose processor that executes functions by loading software programs, a computer on a server used for cloud computing, or the like. Also, a series of processes performed by each device described in the present specification may be distributed among and processed by multiple computers.

Furthermore, the processes described using the flowcharts and sequence diagrams in the present specification may not necessarily be executed in the order illustrated. Some processing steps may be executed in parallel. Moreover, additional processing steps may also be employed, and some of the processing steps may be omitted.

The following configurations also fall within the technical scope of the present invention.
(1) An aerosol generation system including:
   a heater that heats an aerosol source to generate an aerosol; and
   a controller that controls operation of the heater,
   wherein the controller applies control so that pre-heating, executed after a start of heating the aerosol source, is executed until a lapse of a first period, during which a temperature of the heater reaches a first temperature, and a second period, which follows the first period and has a time length according to an initial temperature of the heater.
(2) The aerosol generation system according to (1) described above, wherein:
   the controller sets the time length of the second period longer as the initial temperature of the heater is higher.
(3) The aerosol generation system according to (2) described above, wherein:
   the controller
   controls the operation of the heater based on control information for controlling a temperature at which the aerosol source is heated, the control information being selected from among multiple items of control information;
   in a case where the initial temperature of the heater is a predetermined threshold or higher, set the time length of the second period to a first time length, and, in a case where the initial temperature of the heater is less than the predetermined threshold, set the time length of the second period to a second time length longer than the first time length; and
   set a fixed value for a difference between the first time length and the second time length, regardless of which of the multiple items of control information is selected.
(4) The aerosol generation system according to any one of (1) to (3) described above, wherein:
   the controller determines an end of the first period in response to a trigger indicating that the temperature of the heater has reached the first temperature.
(5) The aerosol generation system according to any one of (1) to (3) described above, wherein:
   the controller sets a time length of the first period according to the initial temperature of the heater, and determines an end of the first period in response to a trigger indicating that the time length set for the first period has elapsed.
(6) The aerosol generation system according to (5) described above, wherein:
   the controller sets the time length of the first period shorter as the initial temperature of the heater is higher.
(7) The aerosol generation system according to any one of (1) to (6) described above, wherein:
   the controller controls the operation of the heater so that the temperature of the heater maintains the first temperature in the second period.
(8) The aerosol generation system according to any one of (1) to (6) described above, wherein:
   the controller controls the operation of the heater so that the temperature of the heater reaches a second temperature higher than the first temperature in the second period.
(9) The aerosol generation system according to (8) described above, wherein:
   the controller sets the first temperature based on the initial temperature of the heater.
(10) The aerosol generation system according to (9) described above, wherein:
   the controller sets the first temperature higher as the initial temperature of the heater is higher.
(11) The aerosol generation system according to any one of (1) to (10) described above, further including:
   a notifier that notifies a user of information indicating a timing at which the pre-heating ends.
(12) The aerosol generation system according to any one of (1) to (11) described above, further including:
   a substrate including the aerosol source heated by the heater.
(13) A control method for controlling an aerosol generation system including a heater that heats an aerosol source to generate an aerosol, the control method including:
   controlling operation of the heater so that pre-heating, executed after a start of heating the aerosol source, is executed until a lapse of a first period, during which a temperature of the heater reaches a first temperature, and a second period, which follows the first period and has a time length according to an initial temperature of the heater
(14) A program executed by a computer controlling an aerosol generation system including a heater that heats an aerosol source to generate an aerosol,
   the program causing the computer to function as:
   a controller that controls operation of the heater so that pre-heating, executed after a start of heating the aerosol source, is executed until a lapse of a first period, during which a temperature of the heater reaches a first temperature, and a second period, which follows the first period and has a time length according to an initial temperature of the heater.

### Reference Signs List

- 100: inhaler device
- 111: power supply
- 112: sensor
- 113: notifier
- 114: memory
- 115: communicator
- 116: controller
- 121: heater
- 140: holder
- 141: internal space
- 142: opening
- 143: bottom
- 144: heat insulator
- 150: stick substrate
- 151: substrate
- 152: inhalation port

## Claims

1. An aerosol generation system comprising:
a heater that heats an aerosol source to generate an aerosol; and
a controller that controls operation of the heater,
wherein the controller applies control so that pre-heating, executed after a start of heating the aerosol source, is executed until a lapse of a first period, during which a temperature of the heater reaches a first temperature, and a second period, which follows the first period and has a time length according to an initial temperature of the heater.

2. The aerosol generation system according to claim 1, wherein:
the controller sets the time length of the second period longer as the initial temperature of the heater is higher.

3. The aerosol generation system according to claim 2, wherein:
the controller
controls the operation of the heater based on control information for controlling a temperature at which the aerosol source is heated, the control information being selected from among a plurality of items of control information;
in a case where the initial temperature of the heater is a predetermined threshold or higher, set the time length of the second period to a first time length, and, in a case where the initial temperature of the heater is less than the predetermined threshold, set the time length of the second period to a second time length longer than the first time length; and
set a fixed value for a difference between the first time length and the second time length, regardless of which of the plurality of items of control information is selected.

4. The aerosol generation system according to any one of claims 1 to 3, wherein:
the controller determines an end of the first period in response to a trigger indicating that the temperature of the heater has reached the first temperature.

5. The aerosol generation system according to any one of claims 1 to 3, wherein:
the controller sets a time length of the first period according to the initial temperature of the heater, and determines an end of the first period in response to a trigger indicating that the time length set for the first period has elapsed.

6. The aerosol generation system according to claim 5, wherein:
the controller sets the time length of the first period shorter as the initial temperature of the heater is higher.

7. The aerosol generation system according to any one of claims 1 to 6, wherein:
the controller controls the operation of the heater so that the temperature of the heater maintains the first temperature in the second period.

8. The aerosol generation system according to any one of claims 1 to 6, wherein:
the controller controls the operation of the heater so that the temperature of the heater reaches a second temperature higher than the first temperature in the second period.

9. The aerosol generation system according to claim 8, wherein:
the controller sets the first temperature based on the initial temperature of the heater.

10. The aerosol generation system according to claim 9, wherein:
the controller sets the first temperature higher as the initial temperature of the heater is higher.

11. The aerosol generation system according to any one of claims 1 to 10, further comprising:
a notifier that notifies a user of information indicating a timing at which the pre-heating ends.

12. The aerosol generation system according to any one of claims 1 to 11, further comprising:
a substrate including the aerosol source heated by the heater.

13. A control method for controlling an aerosol generation system including a heater that heats an aerosol source to generate an aerosol, the control method comprising:
controlling operation of the heater so that pre-heating, executed after a start of heating the aerosol source, is executed until a lapse of a first period, during which a temperature of the heater reaches a first temperature, and a second period, which follows the first period and has a time length according to an initial temperature of the heater.

14. A program executed by a computer controlling an aerosol generation system including a heater that heats an aerosol source to generate an aerosol,
the program causing the computer to function as:
a controller that controls operation of the heater so that pre-heating, executed after a start of heating the aerosol source, is executed until a lapse of a first period, during which a temperature of the heater reaches a first temperature, and a second period, which follows the first period and has a time length according to an initial temperature of the heater.
